(19) Europäisches Patentamt
European Patent Office
Office européen des brevets

(11) EP 3 176 232 A1

(12) # EUROPÄISCHE PATENTANMELDUNG

(43) Veröffentlichungstag:
**07.06.2017 Patentblatt 2017/23**

(51) Int Cl.:
***C09D 5/00*** *(2006.01)*

(21) Anmeldenummer: **15197796.4**

(22) Anmeldetag: **03.12.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HILTI Aktiengesellschaft**
**9494 Schaan (LI)**

(72) Erfinder: **Lang, Martin**
**82152 Planegg (DE)**

(74) Vertreter: **Hilti Aktiengesellschaft**
**Corporate Intellectual Property**
**Feldkircherstrasse 100**
**Postfach 333**
**9494 Schaan (LI)**

(54) **DÄMMSCHICHTBILDENDE ZUSAMMENSETZUNG UND DEREN VERWENDUNG**

(57) Es wird eine dämmschichtbildende Zusammensetzung beschrieben, die ein Bindemittel die ein Bindemittel auf Basis einer Mischung aus einem Epoxid-Harz und einer ungesättigten Verbindung enthält. Durch die erfindungsgemäße Zusammensetzung, deren Expansionsrate relativ hoch ist, können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine große isolierende Wirkung erreicht werden kann. Die erfindungsgemäße Zusammensetzung eignet sich besonders für den Brandschutz, insbesondere als Beschichtung von metallischen und nicht metallischen Substraten, etwa Stahlbauteilen, wie Stützen, Trägern, Fachwerkstäben, zur Erhöhung der Feuerwiderstandsdauer.

EP 3 176 232 A1

Printed by Jouve, 75001 PARIS (FR)

## Beschreibung

Die vorliegende Erfindung betrifft eine dämmschichtbildende Zusammensetzung, insbesondere eine Zusammensetzung mit intumeszierenden Eigenschaften, die ein Bindemittel auf Basis einer Mischung aus einem Epoxid-Harz und einer ungesättigten Verbindung mit Thiol-Verbindungen als Härtungsmittel enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert einen großen Teil seiner Stabilität und seiner Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren im Stand der Technik verschiedene Systeme. Im Wesentlichen wird zwischen 100%-Systemen und lösemittel- bzw. wasserbasierten Systemen unterschieden. Bei den lösemittel- bzw. wasserbasierten Systemen werden Bindemittel, meist Harze, als Lösung, Dispersion oder Emulsion auf das Bauteil aufgetragen. Diese können als Ein- oder Mehrkomponenten-Systeme ausgeführt werden. Nach dem Auftragen verdunstet das Lösungsmittel bzw. das Wasser und hinterlässt einen Film, der mit der Zeit trocknet. Hierbei kann ferner zwischen solchen Systemen unterschieden werden, bei denen sich während der Trocknung die Beschichtung im Wesentlichen nicht mehr ändert, und solchen Systemen, bei denen nach dem Verdunsten das Bindemittel primär durch Oxidations- und Polymerisationsreaktionen härtet was beispielsweise durch den Luftsauerstoff induziert wird. Die 100%-Systeme enthalten die Bestandteile des Bindemittels ohne Lösungsmittel bzw. Wasser. Sie werden auf das Bauteil aufgetragen, wobei die "Trocknung" der Beschichtung durch Reaktion der Bindemittelbestandteile untereinander erfolgt und/oder durch Reaktion mit Bestandteilen der Umgebungsluft wie beispielsweise Wasser.

Die Systeme auf Lösemittel- oder Wasserbasis haben den Nachteil, dass die Trockenzeiten, auch Aushärtezeiten genannt, lang sind und zudem mehrere Schichten aufgetragen werden müssen, also mehrerer Arbeitsgänge bedürfen, um die erforderliche Schichtdicke zu erreichen. Da jede einzelne Schicht vor dem Auftragen der nächsten Schicht entsprechend getrocknet sein muss, führt dies zu einem hohen Aufwand an Arbeitszeit und dementsprechend hohen Kosten und zu einer Verzögerung bei der Fertigstellung des Bauwerks, da je nach klimatischen Bedingungen zum Teil mehrere Tage vergehen, bis die erforderliche Schichtdicke aufgetragen ist. Nachteilig ist auch, dass durch die erforderliche Schichtdicke die Beschichtung während des Trocknens oder bei Hitzeeinwirkung zur Rissbildung und zum Abblättern neigen kann, wodurch im schlimmsten Fall der Untergrund teilweise freigelegt wird, insbesondere bei Systemen, bei denen das Bindemittel nicht nach Verdunsten des Lösungsmittels bzw. des Wassers nachhärtet.

Um diesen Nachteil zu umgehen, wurden Zwei- oder Mehrkomponentensysteme auf Epoxid-Amin-Basis entwickelt, die nahezu ohne Lösemittel auskommen, so dass eine Aushärtung wesentlich schneller erfolgt und zudem dickere Schichten in einem Arbeitsgang aufgetragen werden können, so dass die erforderliche Schichtdicke wesentlich schneller aufgebaut ist. Diese haben jedoch den Nachteil, dass das Bindemittel eine sehr stabile und starre Polymermatrix mit oftmals hohem Erweichungsbereich bildet, was die Schaumbildung durch die Schaumbildner behindert. Daher müssen dicke Schichten aufgetragen werden, um eine ausreichende Schaumdicke für die Isolierung zu erzeugen. Dies ist wiederum nachteilig, da viel Material erforderlich ist. Damit diese Systeme aufgetragen werden können, sind häufig Verarbeitungstemperaturen von bis zu +70°C erforderlich, was die Anwendung dieser Systeme arbeitsaufwendig und teuer in der Installation macht. Ferner sind einige der verwendeten Bindemittelkomponenten toxisch oder in sonstiger Weise kritisch (z.B. reizend, ätzend), wie beispielsweise die bei den Epoxid-Amin-Systemen eingesetzten Amine oder Aminmischungen.

Aus der DE 10 2006 056 403 A1 ist eine intumeszierende Brandschutzbeschichtung auf der Basis eines Epoxidharzes und eines (Meth)acrylatesters, die mit Aminen gehärtet werden, für die Beschichtung von Stahlkonstruktionselementen bekannt.

Der Erfindung liegt daher die Aufgabe zugrunde, ein dämmschichtbildendes Beschichtungssystem der eingangs erwähnten Art zu schaffen, das die genannten Nachteile vermeidet, das insbesondere nicht lösemittel- oder wasserbasiert ist und eine schnelle Aushärtung aufweist, aufgrund entsprechend abgestimmter Viskosität einfach aufzutragen ist und aufgrund der erreichbaren hohen Intumeszenz, d.h. der Bildung einer effektiven Aschekrustenschicht, nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine Brandschutz-Zusammensetzung mit mindestens einer Verbindung (a), die mindestens zwei Epoxidguppen als funktionelle Gruppen (FG-a) aufweist, mit mindestens einer Verbindung (b), die mindestens zwei Gruppen mit elektronenarmen Kohlenstoffmehrfachbindungen pro Molekül als funktionelle Gruppen (FG-b) aufweist, mit mindestens einer Verbindung (c), die mindestens zwei Thiol-Gruppen (-SH) als funktionelle Gruppe (FG-c) aufweist, und mit mindestens einem dämmschichtbildenden Additiv.

Damit setzt sich das Bindemittel aus zwei Bestandteilen zusammen, zum einen aus einer Verbindung (a), die mindestens zwei Epoxidgruppen als funktionelle Gruppen (FG-a) aufweist, und einer Verbindung (b), die mindestens zwei Gruppen mit einer elektronenarmen Kohlenstoffmehrfachbindung pro Molekül als funktionelle Gruppen (FG-b) aufweist. Als Härtungsmittel wird eine Verbindung (c) mit funktionellen Gruppen (FG-c), die sowohl mit der funktionellen Gruppe (FG-a) als auch mit der funktionellen Gruppe (FG-b) reagieren können, verwendet. Hierbei handelt es sich um eine Verbindung (c) mit mindestens zwei Thiol-Gruppen als funktionelle Gruppen (FG-c). Die funktionellen Gruppen (FG-a) reagieren dabei in einer klassischen Epoxid-Thiol-Reaktion mit der Schwefelgruppe und die funktionellen Gruppen (FG-b) reagieren in einer Thia-Michael-Reaktion mit der Thiol-Gruppe.

Die Zusammensetzung kann ferner einen Katalysator für die Reaktion zwischen der Verbindung (a) und der Verbindung (c) enthalten und/oder einen Katalysator für die Reaktion zwischen der Verbindung (b) und der Verbindung (c), wodurch die Zusammensetzung bei niedrigen Temperaturen, etwa Raumtemperatur, hinreichend schnell verarbeitbar und aushärtbar wird.

Aufgrund des gegenüber den Systemen auf Epoxid-Amin-Basis veränderten Erweichungsbereiches der Polymermatrix ist die Intumeszenz hinsichtlich der Expansionsrate relativ hoch, so dass selbst mit dünnen Schichten eine große isolierende Wirkung erreicht wird. Hierzu trägt auch der mögliche hohe Füllgrad der Zusammensetzung mit Brandschutzadditiven bei. Dementsprechend sinkt der Materialaufwand, was sich insbesondere beim großflächigen Auftragen günstig auf die Materialkosten auswirkt.

Die erfindungsgemäße Zusammensetzung ist ein reaktives System, das nicht physikalisch trocknet und damit keinen Volumenverlust durch das Abtrocknen von Lösemitteln oder bei wasserbasierten Systemen von Wasser erleidet, sondern nukleophil härtet. So ist bei einem klassischen System ein Lösemittelgehalt von etwa 25% typisch. Dies bedeutet, dass aus einer 10 mm-Schicht nur 7,5 mm als eigentliche Schutzschicht auf dem zu schützenden Substrat verbleiben. Bei der erfindungsgemäßen Zusammensetzung verbleiben mehr als 96 % der Beschichtung auf dem zu schützenden Substrat. Ferner ist die relative Aschekrustenstabilität aufgrund der vorteilhaften Struktur des im Brandfall gebildeten Schaums sehr hoch.

Verglichen mit lösemittel- oder wasserbasierten Systemen, wenn sie ohne Grundierung aufgetragen werden, zeigen die erfindungsgemäßen Zusammensetzungen eine ausgezeichnete Haftung an unterschiedlichen metallischen und nicht metallischen Substraten, sowie eine ausgezeichnete Kohäsion und Schlagbeständigkeit.

Zum besseren Verständnis der Erfindung werden die folgenden Erläuterungen der hierin verwendeten Terminologie als sinnvoll erachtet. Im Sinne der Erfindung:

- bedeutet *"multifunktionell",* dass die entsprechende Verbindung mehr als eine funktionelle Gruppe pro Molekül aufweist; dementsprechend bedeutet multifunktionell im Zusammenhang mit Epoxidverbindungen, dass diese mehr als eine Epoxidgruppen pro Molekül aufweisen, und in Bezug auf Thiol-Verbindungen, dass diese wenigstens zwei Thiol-Gruppen pro Molekül aufweisen; die Gesamtzahl der jeweiligen funktionellen Gruppen ist die Funktionalität der entsprechenden Verbindung;

- bedeutet *"elektronenarm",* dass die Kohlenstoffmehrfachbindung in unmittelbarer Nähe, d.h. in der Regel an dem

der Mehrfachbindung benachbarten Kohlenstoffatom, elektronenziehende Gruppen trägt, die Elektronendichte von der Mehrfachbindung abziehen, wie beispielsweise C=O;

- bedeutet *"ablativ wirkend",* dass bei Einwirken erhöhter Temperaturen, d.h. oberhalb von 200°C, wie sie etwa im Brandfall auftreten können, eine Reihe von chemischen und physikalischen Reaktionen erfolgen, die Energie in Form von Wärme benötigen, wobei diese Energie der Umgebung entzogen wird; dieser Begriff wird gleichbedeutend mit dem Begriff *"endotherm zersetzend"* verwendet;

- bedeutet *"(Meth)acryl .../... (meth)acryl..."* dass sowohl die "Methacryl.../...methacryl..."- als auch die "Acryl.../...acryl..."-Verbindungen umfasst sein sollen;

- ist ein *"Oligomer"* ein Molekül mit 2 bis 5 Wiederholungseinheiten und ist ein *"Polymer"* ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer;

- bedeutet *"Epoxidäquivalentmasse"* diejenige Menge an Epoxidharz in [g], die ein Äquivalent [Val] Epoxidfunktionen besitzt und berechnet sich aus der Molmasse M in [g/Mol] dividiert durch die Funktionalität *f* in [Val/Mol]; (EEW [g/Val]).

Im Allgemeinen wird angenommen, dass das Umsetzen eines Epoxidharzes mit einer Funktionalität von zwei sowie der ungesättigten Verbindung mit einer Thiolfunktionalisierten Verbindung mit einer Funktionalität von zwei zu linearen molekularen Strukturen führen wird. Oftmals müssen molekulare Strukturen erzeugt werden, die verzweigt und/oder vernetzt sind, wofür wahrscheinlich die Verwendung von mindestens einem Inhaltsstoff mit einer Funktionalität von größer zwei erforderlich ist. Daher ist das Epoxidharz und/oder die Thiol-funktionalisierte Verbindung bevorzugt multifunktionell, wobei das multifunktionelle Epoxidharz oder die multifunktionelle Thiol-funktionalisierte Verbindung oder beide stärker bevorzugt eine Funktionalität von größer zwei (> 2) haben.

Als Verbindung (a), die als funktionelle Gruppe (FG-a) mindestens zwei Epoxidgruppen enthält (hierin auch als Epoxidharz bezeichnet), sind in der Epoxychemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen. Grundlegende Informationen zu und Beispiele für Epoxidharze sind dem Kapitel "Epoxy Resins" der Encyclopedia of Polymer Sciences and Technology, Vol. 9, Wiley-Interscience, 2004, zu entnehmen. Als geeignete Epoxidharze seien beispielhaft erwähnt Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:

a) Reaktionsprodukte von Epichlorhydrin mit Bisphenol A;
b) Reaktionsprodukte von Epichlorhydrin mit Bisphenol S
c) Epoxy-Novolake auf Phenol- oder Cresolbasis;
d) Aromatische Glycidylaminharze;
e) Epoxidharze ohne aromatische Struktureinheiten;

sowie Gemische zweier oder mehrerer derartiger Epoxidharze in beliebigem Verhältnis und in beliebigen Reinheitsgraden.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Glycidylisierungsprodukte von:

- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxynaphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;

- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter bevorzugt im Sinne der Erfindung sind Reaktionsprodukte von Epichlorhydrin mit Bisphenol A mit einem Epoxidäquivalentmasse (EEW) $\leq$ 550 g/Val; Reaktionsprodukte von Epichlorhydrin mit Bisphenol F, dem einfachsten Vertreter der Novolake, mit einem EEW $\leq$ 500 g/Val; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden.

Besonders bevorzugt sind Reaktionsprodukte von Epichlorhydrin mit Bisphenol Amit einem EEW $\leq$ 330 g/Val; Reaktionsprodukte von Epichlorhydrin mit Bisphenol F, dem einfachsten Vertreter der Novolake, mit einem EEW $\leq$ 300 g/Val, beliebige Gemische dieser beiden Reaktionsprodukte, Reaktionsprodukte eines beliebigen Gemisches von Bisphenol A und Bisphenol F mit Epichlorhydrin mit einem EEW $\leq$ 330 g/Val, 5,5-Dimethyl-1,3-bis(2,3-epoxypropyl)-2,4-imidazolidindion; 2,2-Bis[4-(2,3-epoxypropoxy)-cyclohexyl]propan; sowie Gemische zweier oder mehrerer derartiger Epoxidharze in beliebigem Verhältnis und in beliebigen Reinheitsgraden.

Ganz besonders bevorzugt sind Reaktionsprodukte von Epichlorhydrin mit Bisphenol A mit einem EEW $\leq$ 200 g/Val, wie beispielsweise Epilox® A 17-01, Epilox® A 18-00, Epilox® A 19-00, Epilox® A 19-02, Epilox® A 19-03 oder Epilox® A 19-04 der Leuna-Harze GmbH, dargestellt durch die nachfolgende Formel, worin $0 \leq n \leq 0{,}2$;

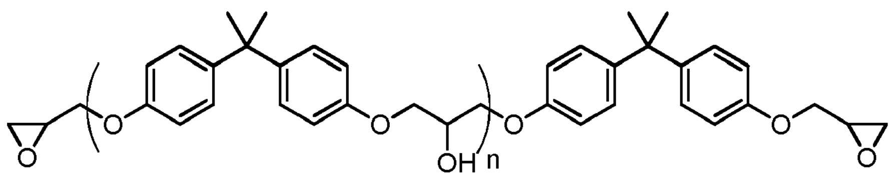

Reaktionsprodukte von Epichlorhydrin mit Bisphenol F, dem einfachsten Vertreter der Novolake, mit einem EEW $\leq$ 185 g/Val, wie beispielsweise Epilox® F 16-01 oder Epilox® F 17-00 der Leuna-Harze GmbH, dargestellt durch die nachfolgende Formel, worin $0 \leq n \leq 0{,}2$;

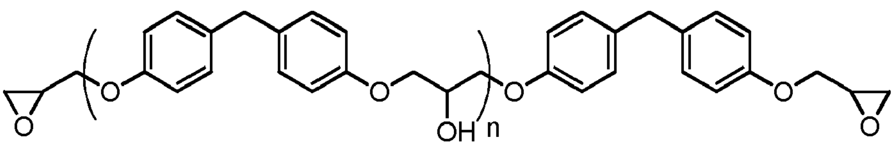

sowie Gemische zweier oder mehrerer derartiger Epoxidharze in beliebigem Verhältnis und in beliebigen Reinheitsgraden, wie beispielsweise Epilox® AF 18-30, Epilox® 18-50 oder Epilox® T 19-27 der Leuna-Harze GmbH, sowie Reaktionsprodukte eines beliebigen Gemisches von Bisphenol A und Bisphenol F mit Epichlorhydrin mit einem EEW $\leq$ 200 g/Val.

Als Epoxidharz (a-1) eignet sich auch ein aliphatisches oder cycloaliphatisches Polyepoxid, wie beispielsweise:

- ein Glycidylether eines gesättigten oder ungesättigten, verzweigten oder unverzweigten, zyklischen oder offenkettigen $C_2$- bis $C_{30}$-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromoneopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;

- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol A-, F- oder A/F-Festharz, welches ähnlich aufgebaut ist wie die bereits genannten Flüssigharze der obigen beiden Formeln, aber anstelle des Index n einen Wert von 2 bis 12 aufweist, und eine Glasübergangstemperatur oberhalb von 25°C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Je nach Funktionalität des Epoxidharzes können der Vernetzungsgrad des Bindemittels und somit zum einen die Festigkeit der entstehenden Beschichtung, als auch deren elastische Eigenschaften eingestellt werden.

Als Verbindung (a) kann jeweils eine Verbindung (a) oder ein Gemisch von zwei oder mehreren, unterschiedlichen Verbindungen (a) eingesetzt werden.

Zweckmäßig wird als Verbindung (b) eine Verbindung mit mindestens zwei elektronenarmen Kohlenstoffmehrfachbindungen, wie C-C-Doppelbindungen oder C-C-Dreifachbindungen, bevorzugt C-C-Doppelbindungen, pro Molekül als funktionelle Gruppe (FG-b) verwendet. Durch die Zugabe der Verbindung (b) kann eine schnelle Aushärtung erreicht werden und die Tieftemperaturhärtung wird verbessert.

Gemäß einer Ausführungsform der Erfindung weist die Verbindung (b) mindestens zwei funktionelle Gruppen (FG-b) mit der nachfolgenden Struktur (I) oder (II) auf:

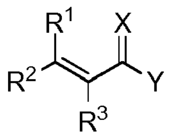
(I)

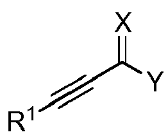
(II)

in denen $R^1$, $R^2$ und $R^3$ jeweils unabhängig voneinander Wasserstoff oder organische Reste darstellen, wie zum Beispiel eine lineare, verzweigte oder cyclische, gegebenenfalls substituierte Alkylgruppe, Arylgruppe, Aralkylgruppe (auch arylsubstituierte Alkylgruppe genannt) oder Alkarylgruppe (auch alkyl-substituierte Arylgruppe genannt), einschließlich Derivate und substituierte Versionen davon, wobei diese unabhängig voneinander zusätzliche Ethergruppen, Carboxylgruppen, Carbonylgruppen, Thiol-analoge Gruppen, Stickstoff-enthaltende Gruppen oder Kombinationen davon enthalten können; X Sauerstoff, Schwefel oder $NR^4$ darstellt, worin $R^4$ Wasserstoff oder jede der organischen Gruppen, wie sie oben für $R^1$, $R^2$ und $R^3$ beschrieben sind, darstellt; Y $OR^5$, $SR^5$ oder $NR^5R^6$ darstellt, worin $R^5$ Wasserstoff oder jede der organischen Gruppen, wie sie oben für $R^1$, $R^2$ und $R^3$ beschrieben sind, darstellt.

Bevorzugt ist die funktionelle Gruppe (FG-b) eine Gruppe der Struktur (III):

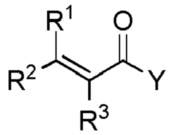
(III)

in der $R^1$, $R^2$ und $R^3$ wie oben beschrieben sind und Y $OR^5$ oder $NR^5R^6$ darstellt, wobei $R^5$ und $R^6$ wie oben beschrieben sind.

Einige geeignete multifunktionelle Verbindungen (b) in der vorliegenden Erfindung umfassen zum Beispiel Moleküle, in denen einige oder alle der funktionellen Gruppen (FG-b) der Strukturen (III) Reste von (Meth)acrylsäure, Fumarsäure oder Maleinsäure, substituierte Versionen oder Kombinationen davon sind, die über eine Esterbindung an die Verbindung (b) angebunden sind. Eine multifunktionelle Verbindung (b) mit funktionellen Gruppen (FG-b) der Strukturen (III), die zwei oder mehr Reste von (Meth)acrylsäure umfassen, wird hierin als "polyfunktionelles (Meth)acrylat" bezeichnet. Polyfunktionelle (Meth)acrylate mit mindestens zwei Doppelbindungen, die als der Akzeptor in der Michael-Addition agieren können, sind bevorzugt.

Beispiele geeigneter Di(meth)acrylate umfassen, sind aber nicht darauf beschränkt: Ethylenglykol-di(meth)acrylat, Propylenglykol-di(meth)acrylat, Diethylenglykol-di(meth)acrylat, Dipropylenglykol-di(meth)acrylat, Triethylenglykol-di(meth)acrylat, Tripropylenglykol-di(meth)acrylat, Tertraethylenglykol-di(meth)acrylat, Tetrapropylenglykol-di(meth)acrylat, Polyethylenglykol-di(meth)acrylat, Polypropylenglykol-di(meth)acrylat, einfach oder mehrfach ethoxyliertes Bisphenol A-Di(meth)acrylat, Bisphenol A diglycidylether-di(meth)acrylat, Resorcinoldiglycidylether-di(meth)acrylat, 1,3-Propandiol-di(meth)acrylat, 1,4-Butanediol-di(meth)acrylat, 1,5-Pentandiol-di(meth)acrylat, 1,6-Hexandiol-di(meth)acrylat, Neopentylglykol-di(meth)acrylat, Cyclohexanedimethanol-di(meth)acrylat, einfach oder mehrfach ethoxyliertes Neopentylglykol-di(meth)acrylat, einfach oder mehrfach propoxyliertes Neopentylglykol-di(meth)acrylat, einfach oder mehrfach ethoxyliertes Cyclohexandimethanol-di(meth)acrylat, propoxyliertes Cyclohexandimethanol-di(meth)acrylat, Arylurethan-di(meth)acrylate, aliphatisches Urethan-di(meth)acrylat, Polyester-di(meth)acrylat und Gemische davon.

Beispiele geeigneter Tri(meth)acrylate umfassen, sind aber nicht darauf beschränkt: Trimethylolpropan-tri(meth)acrylat, trifunktionelles (Meth)acrylsäure-s-triazin, Glycerol-tri(meth)acrylat, einfach oder mehrfach ethoxyliertes Trimethylolpropan-tri(meth)acrylat, einfach oder mehrfach propoxyliertes Trimethylolpropan-tri(meth)acrylat, Tris(2-hydroxyethyl)isocyanurat-tri(meth)acrylat, einfach oder mehrfach ethoxyliertes Glycerol-tri(meth)acrylat, einfach oder mehrfach propoxyliertes Glycerol-tri(meth)acrylat, Pentaerythritol-tri(meth)acrylat, Arylurethan-tri(meth)acrylate, aliphatische Urethan-tri(meth)acrylate, Melamin-tri(meth)acrylate, Epoxy-Novolac-tri(meth)acrylate, aliphatisches Epoxy-tri(meth)acrylat, Polyester-tri(meth)acrylat und Gemische davon.

Beispiele geeigneter Tetra(meth)acrylate umfassen, sind aber nicht darauf beschränkt: Di(trimethylolpropan)-tetra(meth)acrylat, Pentaerythritol-tetra(meth)acrylat, einfach oder mehrfach ethoxyliertes Pentaerythritol-tetra(meth)acrylat, einfach oder mehrfach propoxyliertes Pentaerythritol-tetra(meth)acrylat, Dipentaerythritol-tetra(meth)acrylat, einfach oder mehrfach ethoxyliertes Dipentaerythritol-tetra(meth)acrylat, einfach oder mehrfach propoxyliertes Dipentaerythritol-tetra(meth)acrylat, Arylurethan-tetra(meth)acrylate, aliphatische Urethan-tetra(meth)acrylate, Melamin-tetra(meth)acrylate, Epoxy-Novolac-tetra(meth)acrylate, Polyester-tetra(meth)acrylate und Gemische davon.

Alternativ kann die funktionelle(n) Gruppe(n) (FG-b) an eine Polyolverbindung gebunden sein, die aus der Gruppe ausgewählt ist, bestehend aus Pentaerythritol, Neopentylglykol, Glycerol, Trimethylolpropan, Ethylenglykol und Polyethylenglykolen, Propylenglykolen und Polypropylenglykolen, Butandiol, Pentandiol, Hexandiol, Tricyclodecandimethylol, 2,2,4-Trimethyl-1,3-pentandiol, Bisphenol A, Cyclohexandimethanol, alkoxylierten und/oder propoxylierten Derivaten von Neopentylglykol und Tertraethylenglykol.

Als Verbindung (b) kann jeweils eine Verbindung (b) oder ein Gemisch von zwei oder mehreren, unterschiedlichen Verbindungen (b) eingesetzt werden.

Zweckmäßig kann als Härtungsmittel jede Thiol-funktionalisierte Verbindung (c) (hierin auch als Thiol-Verbindung bezeichnet), wobei die Thiol-Gruppe (-SH) die funktionelle Gruppe (FG-c) bildet, verwendet werden, die mit den Verbindungen (a) und den Verbindungen (b) reagieren kann.

Geeignete multifunktionelle Thiol-Verbindungen basieren auf Polyalkylenoxiden, Polyurethanen, Polyethylenvinylacetaten, Polyvinylalkoholen, Polydienen, hydrierten Polydienen, Alkyden, Alkydpolyestern, (Meth)acrylpolymeren, Polyolefinen, Polyestern, halogenierten Polyolefinen, halogenierten Polyestern, Copolymeren davon oder ein Gemischen davon.

In bevorzugten Ausführungsformen ist die Thiol-Gruppe an eine Polyhydroxyerbindung gebunden, d.h. einer oder mehr mehrwertige(r) Alkohol(e). Einige mehrwertige Alkohole, die als Gerüste geeignet sind, umfassen zum Beispiel Alkandiole, Alkylenglycole, wie Ethylenglycol, Propylenglycol, Glycerole, Zucker, Pentaerythritole, mehrwertige Derivate davon oder Gemische davon. Einige Beispiele für mehrwertige Alkohole, die als Gerüste geeignet sind, sind Neopentylglycol, Trimethylolpropan, Ethylenglycol und Polyethyleneglycol, Propylenglycol und Polypropylenglycol, Butandiol, Pentandiol, Hexandiol, Tricyclodecandimethylol, 2,2,4-Trimethyl-1,3-pentandiol, Bisphenol A, Cyclohexandimethanol, alkoxylierte und/oder propoxylierte Derivate von Neopentylglycol und Tertraethylenglycolcyclohexandimethanol, Hexandiol, Rizinusöl und Trimethylolpropan. Besonders bevorzugt sind Ester der $\alpha$-Thioessisäure ($\alpha$-Mercaptoacetet) und $\alpha$-Thiopropionsäure ($\alpha$-Mercaptopropionate) mit Monoalkoholen, Diolen, Triolen, Tetraolen, Pentaolen und anderen Polyolen. Die auf diese Weise funktionalisierte Alkoholgruppe kann Bestandteil eines Polymers sein. Auch Gemisch von Alkoholen können als Basis für die Thiol-Verbindung verwendet werden. Am stärksten bevorzugt ist die Thiol-Verbindung ein $\alpha$-Thioessigsäureester oder $\alpha$-Thiopropionsäureester oder ein Derivat oder Gemisch davon. In dieser Hinsicht wird Bezug genommen auf die Abschnitte [015] bis [017] der Anmeldung EP 1066335 A1, sowie die EP 1586596 A1 und WO 2007/042199 A1, deren Inhalte hiermit in diese Anmeldung aufgenommen werden.

Bevorzugte Thiol-Verbindungen (c) sind Ester der $\alpha$-Thioessigsäure (2-Mercaptoacetate), $\beta$-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-Verbindung verwendet werden. In dieser Hinsicht wird Bezug genommen auf die WO 99/51663 A1, deren Inhalt hiermit in diese Anmeldung aufgenommen wird.

Als besonders geeignete Thiol-Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure 3-800 (BASF), GPM-800 (Gabriel Performance Products), Capcure LOF (BASF), GPM-800LO (Gabriel Performance Products), Polythiol QE 340 M, KarenzMT PE-1 (Showa Denko), 2-Ethylhexylthioglykolat, *iso*-Octylthioglykolat, Di(*n*-butyl)thiodiglykolat, Glykol-di-3-mercaptopropionat, 1,6-Hexandithiol, Ethylenglykol-bis(2-mercaptoacetat) und Tetra(ethylenglykol)dithiol.

Weiterhin können als Thiol-Verbindungen (b) Polysulfide verwendet werden. Diese können durch Polykondensation von Bis-(2-chlorethyl)-formal mit Alkalipolysulfid hergestellt werden. Trifunktionelle Polysulfide entstehen durch Zugabe von 1,2,3-Trichlorpropan während der Synthese. Das Netzwerk ist aus organischen Segmenten aufgebaut, die über Disulfidbrücken miteinander verknüpft sind. Im weiteren Verlauf der Herstellung wird das Netzwerk durch reduktive Spaltung einzelner Disulfidbindungen mittels Natriumdithionit gezielt zerstört. Dabei werden die Moleküle auf die gewünschte Kettenlänge eingestellt und gleichzeitig die von der Spaltung erfassten Disulfidbindungen in Thiol-Endgruppen umgewandelt. Beispiele dafür sind die Thioplast-Polymere von Akzo Nobel.

Die Thiol-Verbindung (c) kann alleine oder als Gemisch von zwei oder mehreren, unterschiedlichen Thiol-Verbindungen eingesetzt werden.

In der Zusammensetzung der vorliegenden Erfindung kann der relative Anteil an Epoxidharzen (a) zu Thiol-Verbindungen (c) durch das reaktive Äquivalentverhältnis, welches das Verhältnis der Anzahl aller Epoxidgruppen in der Zusammensetzung zu der Anzahl an Thiol-Gruppen in der Zusammensetzung ist, charakterisiert werden. Das reaktive Äquivalentverhältnis beträgt 0,1 bis 10:1, bevorzugt 0,2 bis 5:1, stärker bevorzugt 0,3 bis 3:1, noch stärker bevorzugt 0,5 bis 2:1 und noch stärker bevorzugt 0,75 bis 1,25:1.

Als zusätzliche Härterkomponente, auch als Co-Härtungsmittel bezeichnet, kann optional ein für Epoxidharze üblicher Aminhärter, d.h. eine Verbindung (e), die mindestens eine, bevorzugt zwei oder mehrere Aminogruppen als funktionelle Gruppen (FG-e) aufweist, verwendet werden. Geeignete Beispiele können dem Kapitel "Epoxy Resins" der Encyclopedia of Polymer Sciences and Technology, Vol. 9, Wiley-Interscience, 2004, entnommen werden. Insbesondere haben sich aliphatische oder aromatische Amine, Amidoamine, Polyamide, Polyamin-Epoxidharzaddukte und/oder Ketimine bewährt. Die Aminhärter können einzeln oder als Gemisch zweier oder mehrerer Verbindungen eingesetzt werden. Beispiele sind Ethylendiamin, Propylendiamin, Hexamethylendiamin, Diethylentriamin (DETA), Tetraethylentetramin (TETA), Isophorondiamin (IPDA), m-Xylylendiamin (mXDA), N-Methylbenzylamin (NMB) oder die Ancamide® (Air Products), Diethylaminopropylamin (DEAPA), *N*-Aminoethylpiperazin (N-AEP), Diaminodiphenylsulfon (DDS), 1,8-Diamino-*p*-menthan (MDA). Ebenso können Polyetheramine wie die Verbindungen aus der Jeffamine®-Reihe von Huntsman verwendet werden, z.B. D-230 (Huntsman), Jeffamine® D-400 (Huntsman), Jeffamine® T-403 (Huntsman).

Die Vernetzung des Bindemittels wird dabei durch eine Kombination aus (i) der Thia-Michael-Reaktion und (ii) der Härtung der Epoxidverbindung mit Thiol-Verbindungen (Epoxymercapane bzw. Epoxythiole) und gegebenenfalls (iii) der Aza-Michael-Reaktion und (iv) der Standard Epoxy-Amin-Reaktion erreicht.

Über ein entsprechend gewähltes Gemisch aus Thiol-Verbindung (c) und Aminen (e) als Härtungsmittel für das Epoxidharz (a) und die multifunktionelle Verbindung (b) können die Beschichtungseigenschaften eingestellt werden.

Bevorzugt wird ein Katalysator (K-1) für die Härtung, d.h. die Reaktion des Epoxidharzes (a) mit der Thiol-Verbindung (c) verwendet. Durch die Verwendung eines Katalysators werden Zusammensetzungen erhalten, die schnell, d.h. innerhalb von wenigen Minuten, und vollständig auch bei Raumtemperatur aushärten, was solche Zusammensetzungen sehr attraktiv für die Anwendung vor Ort, etwa auf der Baustelle macht.

Als Katalysatoren (K-1) können die üblicherweise für Reaktionen zwischen Epoxidharzen und Thiol-Verbindungen verwendeten Verbindungen, wie tertiäre Amine, z.B. Benzyldimethylamin, N,N-Dimethylpropylamin, 1,8-Diazabicyclo[5.4.0]undec-7-en und Bis-N,N-Dimethylethanolaminether, Phenol-Derivate, z.B. Nonylphenol, und dergleichen, die dem Fachmann bekannt sind, verwendet werden. In dieser Hinsicht wird Bezug genommen auf die WO 2012/08224 A1, deren Inhalt hiermit in diese Anmeldung aufgenommen wird.

In einer bevorzugten Ausführungsform der Erfindung ist der Katalysator (K-1) ein Aminophenol oder ein Ether davon, der mindestens eine tertiäre Aminogruppe gegebenenfalls zusammen mit einer primären und/oder sekundären Aminogruppe aufweist, insbesondere solche der allgemeinen Formel (XX),

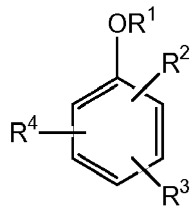

(XX)

in der $R^1$ Wasserstoff oder ein linearer oder verzweigter $C_1$-$C_{15}$-Alkylrest ist, $R^2$ $(CH_2)_nNR^5R^6$- oder $NH(CH_2)_nNR^5R^6$-ist, in denen $R^5$ und $R^6$ unabhängig voneinander ein linearer oder verzweigter $C_1$-$C_{15}$-Alkylrest sind und n = 0 oder 1 ist, $R^3$ und $R^4$ unabhängig voneinander Wasserstoff, $(CH_2)_nNR^7R^8$ oder $NH(CH_2)_nNR^7R^8$ sind, $R^7$ und $R^8$ unabhängig voneinander Wasserstoff oder ein linearer oder verzweigter $C_1$-$C_{15}$-Alkylrest sind und n = 0 oder 1 ist.

$R^1$ ist bevorzugt Wasserstoff oder ein $C_1$-$C_{15}$-Alkylrest, insbesondere ein linearer $C_1$-$C_{15}$-Alkylrest, stärker bevorzugt Methyl oder Ethyl und am stärksten bevorzugt Methyl.

Bevorzugt ist das Phenol der Formel (XX) in 2-, 4- und 6-Position substituiert, d.h. die Substituenten $R^2$, $R^3$ und $R^4$ sitzen in 2-, 4- und 6-Position.

Für den Fall, dass $R^5$, $R^6$, $R^7$ und $R^8$ Alkylreste sind, sind diese bevorzugt ein $C_1$-$C_5$-Alkylrest, stärker bevorzugt Methyl oder Ethyl und am stärksten bevorzugt Methyl.

Als Katalysator (K-1) kann entweder eine Verbindung oder ein Gemisch von mindestens zwei Verbindungen der Formel (XX) eingesetzt werden.

Besonders bevorzugt ist der Katalysator (K-1) unter 2,4,6-Tris(dimethylaminomethyl)phenol, Bis(dimethylaminomethyl)phenol, 2,4,6-Tris(dimethylamino)phenol und einem Gemisch davon ausgewählt.

Obwohl die Reaktion zwischen der multifunktionellen Verbindung (b) und der Thiol-Verbindung (c) bereits ohne Katalysator abläuft und eine Härtung stattfindet, kann ein Katalysator (K-2) für diese Reaktion verwendet werden. Dieser weitere Katalysator (K-2) kann zusätzlich zu dem Katalysator (K-1) für die Reaktion zwischen dem Epoxid-Harz (a) und der Thiol-Verbindung (c) verwendet werden.

Als Katalysatoren (K-2) können die üblicherweise für Michael-Additionsreaktionen, insbesondere zwischen elektronenarmen C-C-Mehrfachbindungen, besonders bevorzugt C-C-Doppelbindungen, und aktive Wasserstoffatome enthaltende Verbindungen, insbesondere Thiole, verwendeten Nukleophile verwendet werden, wie Trialkylphosphine, tertiäre Amine, einer Guanidinbase, einem Alkoholat, einem Tetraorganoammoniumhydroxid, einem anorganischen Carbonat oder Bicarbonat, einem Carbonsäuresalz oder einer Superbase, einem Nukleophil wie etwa einem primären oder einem sekundären Amin oder einem tertiären Phosphin (vgl. etwa C. E. Hoyle, A. B. Lowe, C. N. Bowman, Chem Soc. Rev. 2010, 39, 1355-1387), die dem Fachmann bekannt sind.

Geeignete Katalysatoren (K-2) sind beispielsweise Triethylamin, Ethyl-*N,N*-diisopropylamin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), Dimethylaminopyridin (DMAP), Tetramethylguanidin (TMG), 1,8-Bis(dimethylamino)naphthalin, 2,6-Di-*tert*-butylpyridin, 2,6-Lutidin, Natriummethanolat, Kaliummethanolat, Natriumethanolat, Kaliumethanolat, Kalium-*tert*-butylalkoholat, Benzyltrimethylammoniumhydroxid, Kaliumcarbonat, Kaliumbicarbonat, Natrium- oder Kaliumsalze von Carbonsäuren, deren konjugierte Säurestärken zwischen $pK_a$ 3 und 11 liegen, *n*-Hexylamin, Di-*n*-propylamin, Tri-n-octylphosphin, Dimethylphenylphosphin, Methyldiphenylphosphin und Triphenylphosphin.

In einer Ausführungsform der Erfindung wird als Katalysator (K-1) und (K-2) eine Verbindung verwendet, welche sowohl die Reaktion zwischen dem Epoxid-Harz (a) und der Thiol-Verbindung (c) und der multifunktionellen Verbindung (b) und der Thiol-Verbindung (c) zu katalysieren vermag.

Der jeweilige Katalysator kann in katalytischen Mengen oder äquimolar oder im Überschuss eingesetzt werden.

Durch Zugabe mindestens eines Reaktivverdünners kann die Viskosität der Zusammensetzung entsprechend den Applikationseigenschaften eingestellt bzw. angepasst werden.

In einer Ausführungsform der Erfindung enthält die Zusammensetzung daher weitere epoxidgruppenhaltige Verbindungen als Reaktivverdünner, falls erforderlich. Diese Verbindungen enthalten eine oder mehrere Epoxidgruppen. Grundsätzlich kann jede niedrigviskose Verbindung, die mindestens eine Epoxidgruppe pro Molekül trägt, verwendet werden. Es können zwei oder mehrere unterschiedliche Reaktivverdünner kombiniert werden. Geeignete Beispiele sind Allylglycidylether, Butylglycidylether (BGE), 2-Ethylhexylglycidylether, Alkylglycidylether ($C_{12}$-$C_{14}$), Tridecylglycidylether, Phenylglycidylether (PGE), o-Kresolglycidylether (CGE), p-*tert*-Butylglycidylether, Resorcindiglycidylether (RDGE), 1,4-Butandioldiglycidylether (BDGE), 1,6-Hexandioldiglycidylether (HDGE), Cyclohexandimethanoldiglycidylether, Neopentylglycoldiglycidylether, Trimethylolpropantriglycidylether, Glycerintriglycidylether, Polypropylenglycoldiglycidylether sowie epoxidierte Pflanzenöle wie beispielsweise epoxidiertes Leinöl und epoxidiertes Rizinusöl.

In einer weiteren Ausführungsform der Erfindung enthält die Zusammensetzung statt oder neben einer weiteren epoxidgruppenhaltigen Verbindung als Reaktivverdünner eine weitere Verbindung mit mindestens einer Kohlenstoffmehrfachbindung, welche eine geringe Viskosität aufweist als ggf. weiteren Reaktivverdünner. Geeignete Reaktivverdünner sind Verbindungen mit Kohlenstoffmehrfachbindungen, die jedoch monomer oder oligomer, bevorzugt monomer sind, und können die hierin genannten entsprechenden Gerüste aufweisen.

Erfindungsgemäß enthält die Zusammensetzung ein dämmschichtbildendes Additiv, wobei das Additiv sowohl einzelne Verbindungen als auch ein Gemisch von mehreren Verbindungen umfassen kann.

Zweckmäßig werden als dämmschichtbildende Additive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Treibmittel, und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)Polyole. Bevorzugt werden Pentaerythrit, Dipentaerythrit oder Polyvinylacetat eingesetzt.

Es sei erwähnt, dass das Bindemittel im Brandfall selbst auch die Funktion eines Kohlenstofflieferanten haben kann.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkallationsverbindung, die auch als Blähgraphit bekannt sind. Diese können ebenfalls ins Bindemitteleingebunden werden.

Als Blähgraphit kommen beispielsweise bekannte Einlagerungsverbindungen von $SO_x$, $NO_x$, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$ NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von $\leq 50$ $\mu$m, vorzugsweise von 0,5 bis 10 $\mu$m besitzt. Im Fall der Verwendung des teilchenförmigen Metalls in Form von Fasern, Fäden und/oder Whiskers ist eine Dicke von 0,5 bis 10 $\mu$m und eine Länge von 10 bis 50 $\mu$m bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Die Zusammensetzung kann neben den ablativ wirkenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und

Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder mehrkomponenten-System konfektioniert werden.

Wenn die mindestens eine Verbindung (a) und die mindestens eine Verbindung (b) ohne die Verwendung eines Katalysators bei Raumtemperatur nicht mit der mindestens einen Thiol-Verbindung (c) reagieren, können diese zusammen gelagert werden. Falls eine Reaktion bei Raumtemperatur eintritt, müssen die mindestens eine Verbindung (a) und die mindestens eine Verbindung (b) reaktionsinhibierend getrennt von der mindestens einen Thiol-Verbindung (c) angeordnet werden. In Anwesenheit eines Katalysators muss dieser entweder getrennt von den Verbindungen (a) und (b) gelagert werden. Hierdurch wird erreicht, dass die beiden Verbindungen (a) und (b) und die mindestens eine Thiol-Verbindung (c) erst unmittelbar vor der Anwendung miteinander gemischt werden und die Härtungsreaktion auslösen. Dies macht das System einfacher in der Handhabung.

In einer bevorzugten Ausführungsform der Erfindung ist die erfindungsgemäße Zusammensetzung als Zweikomponenten-System konfektioniert, wobei die mindestens eine Verbindung (a) und die mindestens eine Verbindung (b) reaktionsinhibierend getrennt von der mindestens einen Thiol-Verbindung (c) angeordnet und damit reaktionsinhibierend auf zwei Komponenten aufgeteilt sind. Dementsprechend enthält eine erste Komponente, die Komponente I, die Verbindungen (a) und (b) und eine zweite Komponente, die Komponente II, die mindestens eine Thiol-Verbindung (c).

Das mindestens eine Epoxidharz (a) ist dabei bevorzugt in einer in einer Menge von 15 bis 95 Gew.-% in der Komponente I enthalten.

Wird ein Reaktivverdünner verwendet, so ist dieser in einer Menge von 90 bis 2 Gew.-%, bevorzugt 70 bis 3 Gew.-%, weiter bevorzugt 50 bis 4 Gew.-% und stärker bevorzugt 40 bis 5 Gew.-% in der Komponente I enthalten.

Die Thiol-Verbindung (c) ist bevorzugt in einer Menge von 0,5 bis 90 Gew.-%, besonders bevorzugt in einer Menge von 2 bis 85 Gew.-% in der Komponente II enthalten.

Die multifunktionelle Verbindung (b), die mindestens zwei elektronenarme Kohlenstoffmehrfachbindungen pro Molekül als funktionelle Gruppen aufweist, ist bevorzugt in einer Menge von 0,5 bis 75 Gew.-%, besonders bevorzugt in einer Menge von 1 bis 50 Gew.-% in der Komponente I enthalten.

Das dämmschichtbildende Additiv kann dabei als Gesamtmischung oder in Einzelkomponenten aufgeteilt in einer Komponente oder mehreren Komponenten enthalten sein. Dessen Aufteilung erfolgt abhängig von der Verträglichkeit der in der Zusammensetzung enthaltenen Verbindungen, so dass weder eine Reaktion der in der Zusammensetzung enthaltenen Verbindungen miteinander bzw. eine gegenseitige Störung erfolgen kann. Dies ist von den verwendeten Verbindungen abhängig. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung. Enthält die Zusammensetzung ferner einen Aschekrustenstabilisator, ist dieser derart auf die Komponenten aufgeteilt, dass eine der Komponenten zumindest einen Teil des Aschekrustenstabilisators enthält und die jeweils andere Komponente gegebenenfalls einen weiteren Teil des Aschekrustenstabilisators enthält.

Das dämmschichtbildende Additiv kann in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil des Bestandteils C in der Gesamtformulierung so hoch wie möglich eingestellt. Bevorzugt beträgt der Anteil des Bestandteils C in der Gesamtformulierung 35 bis 85 Gew.-% und besonders bevorzugt 40 bis 85 Gew.-%.

Die Zusammensetzung wird als Paste mit einem Pinsel, einer Rolle oder durch Sprühen auf das Substrat, insbesondere metallische Substrat aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, welche in lösemittel- oder wasserbasierten Systemen zu einem Auswaschen von wasserlöslichen Bestandteilen wie dem Ammoniumpolyphosphat führen kann, bzw. bei der Aufnahme von Staub zu einer reduzierten Intumeszenz. Durch die geringe Viskosität der Zusammensetzung trotz des hohen Feststoffanteils bleibt die Zusammensetzung einfach zu verarbeiten, insbesondere durch gängige Sprühverfahren. Aufgrund des niedrigen Erweichungspunktes des Bindemittels und des hohen Feststoffanteils, ist selbst bei geringer Schichtdicke die Expansionsrate bei Hitzeeinwirkung hoch.

Deshalb ist die erfindungsgemäße zwei- oder mehrkomponentige Zusammensetzung als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung.

Die vorliegende Erfindung betrifft auch Objekte, die erhalten werden, wenn die erfindungsgemäße Zusammensetzung ausgehärtet ist. Die Objekte haben ausgezeichnete dämmschichtbildende Eigenschaften.

Die folgenden Beispiele dienen der weiteren Erläuterung der Erfindung.

## AUSFÜHRUNGSBEISPIELE

Für die Herstellung von erfindungsgemäßen dämmschichtbildenden Zusammensetzungen werden wie nachfolgend angegeben die Einzelkomponenten mit Hilfe eines Dissolvers vermengt und homogenisiert

Es wurden jeweils das Aushärteverhalten beobachtet, anschließend der Intumeszenzfaktor und die relative Aschekrustenstabilität bestimmt. Hierzu wurde die Massen jeweils in eine runde Teflon-Form mit etwa 2 mm Tiefe und 48 mm Durchmesser gegeben.

Die Zeit für die Aushärtung entspricht dabei der Zeit, nach der die Proben durchgehärtet waren und der Teflon-Form entnommen werden konnten.

Zur Bestimmung des Intumeszenzfaktors und der relativen Aschekrustenstabilität wurde ein Muffelofen auf 600°C vorgeheizt. Es wurde eine Mehrfachmessung der Probendicke mit der Schieblehre durchgeführt und der Mittelwert $h_M$ berechnet. Dann wurden die Proben jeweils in eine zylindrische Stahlform eingebracht und für 30 min im Muffelofen erhitzt. Nach Abkühlen auf Raumtemperatur wurde die Schaumhöhe $h_{E1}$ zunächst zerstörungsfrei bestimmt (Mittelwert einer Mehrfachmessung). Der Intumeszenzfaktor / berechnet sich wie folgt:

$$\text{Intumeszenzfaktor I:} \qquad I = h_{E1} : h_M$$

Anschließend ließ man in der zylindrischen Stahlform ein definiertes Gewicht (m = 105 g) aus einer definierten Höhe (h = 100 mm) auf den Schaum fallen und bestimmte die nach dieser teilweise zerstörenden Einwirkung verbleibende Schaumhöhe $h_{E2}$. Die relative Aschekrustenstabilität wurde wie folgt berechnet:

$$\text{relative Aschekrustenstabilität (AKS): AKS} = h_{E2} : h_{E1}$$

Bei den folgenden Beispielen wurde als dämmschichtbildendes Additiv folgende Zusammensetzung verwendet:

| Bestandteil | Menge [g] |
|---|---|
| Pentaerythrit | 8,7 |
| Melamin | 8,7 |
| Ammoniumpolyphosphat | 16,6 |
| Titandioxid | 7,9 |

### Vergleichsbeispiel 1

Als Vergleich diente ein auf wässriger Dispersionstechnologie basiertes kommerzielles Brandschutzprodukt (Hilti CFP S-WB).

### Vergleichsbeispiel 2

Als weiter Vergleich diente ein Standard-Epoxy-Amin-System (Jeffamin® T-403, flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH) und 1,6-Hexandioldiglycidylether), das zu 60 % mit einem Intumeszenzgemisch analog den obigen Beispielen gefüllt ist, getestet.

**Vergleichsbeispiel 3**

Als weiter Vergleich diente ein Standard-Epoxy-Amin-System (Isophorondiamin, Trimethylolpropantriacrylat und flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH)), das zu 60 % mit einem Intumeszenzgemisch analog den obigen Beispielen gefüllt ist, getestet.

**Vergleichsbeispiel 4**

Als weiterer Vergleich diente folgende Zusammensetzung, die analog der DE 10 2006 056 403 A1 hergestellt wurde:

| Verbindungen | Menge [g] |
|---|---|
| Bisphenol A/F Epoxidharz 1) | 17,65 |
| 1,1,1-Tris(hydroxymethyl)propantriacrylat 2) | 3,38 |
| Diethylentriamin 3) | 1,41 |
| Polyetheramin 4) | 5,55 |
| dämmschichtbildendes Additiv wie oben angegeben | 42 |
| 1) Epilox AF 18-30; LEUNA-Harze GmbH<br>2) Alfa Aesar<br>3) Merck<br>4) Jeffamine T-403, Huntsman Corp. | |

**Beispiel 1**

| Verbindungen | Menge [g] |
|---|---|
| Bisphenol A/F Epoxidharz 5) | 4,37 |
| 1,1,1-Tris(hydroxymethyl)propantriacrylat 6) | 7,41 |
| 2,4,6-Tris(dimethylaminomethyl)phenol, Bis[(dimethylamino)methyl]phenol 7) | 0,24 |
| Pentaerythritoltetra(3-mercaptopropionat) 8) | 2,45 |
| Glykoldi(3-mercaptopropionat) 9) | 9,54 |
| dämmschichtbildendes Additiv wie oben angegeben | 36 |
| 5) Epilox AF 18-30; LEUNA-Harze GmbH<br>6) Alfa Aesar<br>7) Ancamin K54; Huntsman Corp.<br>8) Thiocure PETMP; BRUNO BOCK Chemische Fabrik GmbH & Co KG<br>9) Thiocure GDMP; BRUNO BOCK Chemische Fabrik GmbH & Co KG | |

**Beispiel 2**

| Verbindungen | Menge [g] |
|---|---|
| Bisphenol A/F Epoxidharz 5) | 6,74 |
| 1,1,1-Tris(hydroxymethyl)propantriacrylat 6) | 3,79 |
| 2,4,6-Tris(dimethylaminomethyl)phenol, Bis[(dimethylamino)methyl]phenol 7) | 0,20 |

(fortgesetzt)

| Verbindungen | Menge [g] |
|---|---|
| Pentaeryth ritoltetra (3-mercaptopropion at) B) | 1,88 |
| Glykoldi(3-mercaptopropionat) 9) | 7,36 |
| dämmschichtbildendes Additiv wie oben angegeben | 30 |

5) Epilox AF 18-30; LEUNA-Harze
6) Alfa Aesar
7) Ancamin K54; Huntsman Corp.
8) Thiocure PETMP; BRUNO BOCK Chemische Fabrik GmbH & Co KG
9) Thiocure GDMP; BRUNO BOCK Chemische Fabrik GmbH & Co KG

**Beispiel 3**

| Verbindungen | Menge [g] |
|---|---|
| Bisphenol A/F Epoxidharz 5) | 11,31 |
| 1,1,1-Tris(hydroxymethyl)propantriacrylat 6) | 2,13 |
| 2,4,6-Tris(dimethylaminomethyl)phenol, Bis[(dimethylamino)methyl]phenol 7) | 0,24 |
| Pentaerythritoltetra(3-mercaptopropionat) 8) | 2,11 |
| Glykoldi(3-mercaptopropionat) 9) | 8,22 |
| dämmschichtbildendes Additiv wie oben angegeben | 36 |

5) Epilox AF 18-30
6) Alfa Aesar
7) Ancamin K54; Huntsman Corp.
8) Thiocure PETMP; BRUNO BOCK Chemische Fabrik GmbH & Co KG
9) Thiocure GDMP; BRUNO BOCK Chemische Fabrik GmbH & Co KG

Aus den in Tabelle 1 dargestellten Ergebnissen wird deutlich, dass die Aushärtung der erfindungsgemäßen Zusammensetzungen schneller erfolgt, als die Vergleichszusammensetzung.

Tabelle 1: Ergebnisse der Messungen des Intumeszenzfaktors, der Aschenkrustenstabilität und der Aushärtezeit

| Beispiel | Intumeszenzfaktor I (Vielfaches) | relative Aschenkrustenstabilität AKS (Vielfaches) | Probendicke $h_M$ (mm) | Aushärtezeit (min) |
|---|---|---|---|---|
| 1 | 10,8 | 0,93 | 2,97 | 5 min |
| 2 | 17,6 | 0,91 | 1,87 | 30 min |
| 3 | 15,5 | 0,74 | 1,93 | 2 h |
| Vergleichsbeispiel 1 | 36 | 0,62 | 1,8 | 10 Tage |
| Vergleichsbeispiel 2 | 22 | 0,04 | 1,6 | 12 Stunden |
| Vergleichsbeispiel 3 | 1,7 | 0,6 | 1,2 | 1 Tag |
| Vergleichsbeispiel 4 | 64,5 | 0,02 | 1,4 | 7 min |

## Patentansprüche

1. Dämmschichtbildende Zusammensetzung mit
mindestens einer Verbindung (a), die mindestens zwei Epoxidguppen als funktionelle Gruppen (FG-a) aufweist,
mindestens einer Verbindung (b), die mindestens zwei Gruppen mit elektronenarmen Kohlenstoffmehrfachbindungen pro Molekül als funktionelle Gruppen (FG-b) aufweist,
mindestens einer Thiol-Verbindung (c), die mindestens zwei Thiol-Gruppen als funktionelle Gruppen (FG-c) aufweist, und
mit mindestens einem dämmschichtbildenden Additiv.

2. Zusammensetzung nach einem der vorhergehenden Ansprüche, wobei das mindestens eine multifunktionelle Epoxidharz (a) durch die Reaktion von Polyhydroxyverbindungen mit Epihalogenhydrinen oder deren Vorläufern erhältlich ist und eine Epoxidäquivalentmasse (EEW) $\leq$ 550 g/Val aufweist.

3. Zusammensetzung nach Anspruch 2, wobei die Polyhydroxyverbindung unter mehrwertigen Phenolen ausgewählt ist.

4. Zusammensetzung nach Anspruch 3, wobei die aromatische Polyhydroxyverbindung Bisphenol A oder Bisphenol F oder ein Gemisch davon ist.

5. Zusammensetzung nach einem der vorhergehenden Ansprüche, wobei die funktionellen Gruppen (FG-b) der Verbindung (b) die Struktur (I) oder (II) aufweisen:

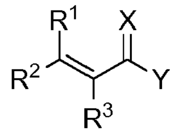
(I)

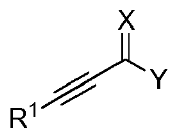
(II)

in denen
$R^1$, $R^2$ und $R^3$ jeweils unabhängig voneinander Wasserstoff, eine lineare, verzweigte oder cyclische, gegebenenfalls substituierte Alkylgruppe, Arylgruppe, Aralkylgruppe oder Alkylarylgruppe darstellen, wobei diese unabhängig voneinander zusätzliche Ethergruppen, Carboxylgruppen, Carbonylgruppen, Thiol-analoge Gruppen, Stickstoff enthaltende Gruppen oder Kombinationen davon enthalten können; X O, S oder $NR^4$ darstellt, worin $R^4$ Wasserstoff oder jede der organischen Gruppen, wie sie für $R^1$, $R^2$ und $R^3$ beschrieben sind, darstellt; Y $OR^5$, $SR^5$ oder $NR^5R^6$ darstellt, worin $R^5$ und $R^6$ Wasserstoff oder jede der organischen Gruppen, wie sie oben für $R^1$, $R^2$ und $R^3$ beschrieben sind, darstellen.

6. Zusammensetzung nach einem der vorhergehenden Ansprüche, wobei die Verbindung (c) unter Estern der $\alpha$-Thioessigsäure (2-Mercaptoacetate), $\beta$-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen oder Gemischen davon sowie unter 2-Hydroxy-3-mercaptopropylderivaten von Monoalkoholen, Diolen, Triolen, Tetraolen, Pentaolen oder anderen Polyolen oder Gemischen davon ausgewählt ist.

7. Zusammensetzung nach einem der vorhergehenden Ansprüche, wobei die Zusammensetzung ferner mindestens eine Verbindung (e), die mindestens zwei Aminogruppen als funktionelle Gruppen (FG-e) aufweist, als Co-Härtungsmittel enthält,.

8. Zusammensetzung nach Anspruch **Fehler! Verweisquelle konnte nicht gefunden werden.,** wobei die mindestens eine Verbindung (e) unter primären und/oder sekundären aliphatischen Aminen und/oder Polyaminen ausgewählt ist.

9. Zusammensetzung nach einem der vorhergehenden Ansprüche, wobei die Zusammensetzung ferner einen Katalysator (K-1) für die Reaktion der Verbindung (a) mit der Verbindung (c) und/oder einen Katalysator (K-2) für die

Reaktion der Verbindung (b) mit der Verbindung (c) enthält.

**10.** Zusammensetzung nach Anspruch 9, wobei der Katalysator (K-1) ein Phenol-Derivat oder ein tertiäres Amin ist.

**11.** Zusammensetzung nach einem der vorhergehenden Ansprüche, wobei das dämmschichtbildende Additiv (D) ein Gemisch, das gegebenenfalls mindestens einen Kohlenstofflieferant, mindestens einen Säurebildner und mindestens ein Treibmittel umfasst, und/oder mindestens eine thermisch expandierbare Verbindung umfasst.

**12.** Zusammensetzung nach Anspruch 11, wobei das dämmschichtbildende Additiv (D) ferner mindestens einen Aschekrustenstabilisator enthält.

**13.** Zusammensetzung nach einem der vorhergehenden Ansprüche, wobei die Zusammensetzung ferner organische und/oder anorganische Zuschlagstoffe und/oder weitere Additive enthält.

**14.** Verwendung der Zusammensetzung nach einem der Ansprüche 1 bis 13 als Beschichtung.

**15.** Verwendung nach Anspruch 14 für die Beschichtung von Stahlkonstruktionselementen.

**16.** Verwendung nach Anspruch 14 für die Beschichtung von metallisch und/oder nicht metallischen Substraten.

**17.** Verwendung nach einem der Ansprüche 14 bis 16 als Brandschutzschicht.

**18.** Gehärtete Objekte, erhalten durch Härten der Zusammensetzung nach einem der Ansprüche 1 bis 13.

Europäisches Patentamt
European Patent Office
Office européen des brevets

# EUROPÄISCHER RECHERCHENBERICHT

Nummer der Anmeldung
EP 15 19 7796

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/007628 A1 (AKZO NOBEL COATINGS INT BV [NL]) 22. Januar 2015 (2015-01-22) * claims 1-14; examples composition No. 7; Tables 1 and 3; page 14 line 13 (alternative use of polythiol curing agent) * | 1-18 | INV. C09D5/00 |
| X<br>A | EP 2 535 184 A2 (LG HAUSYS LTD [KR]) 19. Dezember 2012 (2012-12-19) * coating solution described in [0093] * | 1-13,18<br>14-17 | |
| X<br>A | WO 99/40142 A1 (LORD CORP [US]) 12. August 1999 (1999-08-12) * examples 1 and 2; together with page 8 l. 10 - page 9 l. 12 * | 1-13,18<br>14-17 | |
| Y | WO 2014/095502 A1 (HILTI AG [LI]) 26. Juni 2014 (2014-06-26) * claims 1-28; examples * | 1-18 | |
| Y | WO 2014/095491 A1 (HILTI AG [LI]) 26. Juni 2014 (2014-06-26) * claims 1-5; examples * | 1-18 | RECHERCHIERTE SACHGEBIETE (IPC)<br>C09D<br>C08K |

Der vorliegende Recherchenbericht wurde für alle Patentansprüche erstellt

2

| Recherchenort | Abschlußdatum der Recherche | Prüfer |
|---|---|---|
| München | 11. Mai 2016 | Kositza, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 15 19 7796

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2016

| Im Recherchenbericht angeführtes Patentdokument | Datum der Veröffentlichung | Mitglied(er) der Patentfamilie | Datum der Veröffentlichung |
|---|---|---|---|
| WO 2015007628 A1 | 22-01-2015 | AU 2014292278 A1 | 21-01-2016 |
| | | CA 2917250 A1 | 22-01-2015 |
| | | CN 105358632 A | 24-02-2016 |
| | | EP 3022265 A1 | 25-05-2016 |
| | | KR 20160030515 A | 18-03-2016 |
| | | SG 11201600097T A | 26-02-2016 |
| | | TW 201516102 A | 01-05-2015 |
| | | WO 2015007628 A1 | 22-01-2015 |
| EP 2535184 A2 | 19-12-2012 | CN 102652062 A | 29-08-2012 |
| | | EP 2535184 A2 | 19-12-2012 |
| | | JP 5383929 B2 | 08-01-2014 |
| | | JP 2013516340 A | 13-05-2013 |
| | | KR 20110092797 A | 18-08-2011 |
| | | TW 201130880 A | 16-09-2011 |
| | | US 2012168074 A1 | 05-07-2012 |
| | | WO 2011099777 A2 | 18-08-2011 |
| WO 9940142 A1 | 12-08-1999 | AU 759693 B2 | 17-04-2003 |
| | | AU 2352199 A | 23-08-1999 |
| | | BR 9909094 A | 05-12-2000 |
| | | CA 2319013 A1 | 12-08-1999 |
| | | CN 1289348 A | 28-03-2001 |
| | | EP 1053271 A1 | 22-11-2000 |
| | | JP 2002502903 A | 29-01-2002 |
| | | US 6153719 A | 28-11-2000 |
| | | WO 9940142 A1 | 12-08-1999 |
| WO 2014095502 A1 | 26-06-2014 | DE 102012223515 A1 | 18-06-2014 |
| | | EP 2935475 A1 | 28-10-2015 |
| | | KR 20150097708 A | 26-08-2015 |
| | | US 2015275031 A1 | 01-10-2015 |
| | | WO 2014095502 A1 | 26-06-2014 |
| WO 2014095491 A1 | 26-06-2014 | DE 102012223513 A1 | 18-06-2014 |
| | | EP 2935470 A1 | 28-10-2015 |
| | | US 2015299578 A1 | 22-10-2015 |
| | | WO 2014095491 A1 | 26-06-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102006056403 A1
- EP 1066335 A1
- EP 1586596 A1
- WO 2007042199 A1
- WO 9951663 A1
- WO 201208224 A1
- GB 2007689 A1
- EP 139401 A1
- US 3969291 A1
- EP 1489136 A1
- US 4442157 A
- US 3562197 A
- GB 755551 A
- EP 138546 A1


### In der Beschreibung aufgeführte Nicht-Patentliteratur


- Epoxy Resins. Encyclopedia of Polymer Sciences and Technology. Wiley-Interscience, 2004, vol. 9
- **C. E. HOYLE ; A. B. LOWE ; C. N. BOWMAN.** *Chem Soc. Rev.,* 2010, vol. 39, 1355-1387
- **S. V LEVCHIK ; E. D WEIL.** *Polym. Int.,* 2004, vol. 53, 1901-1929